(19) Europäisches Patentamt / European Patent Office / Office européen des brevets

(11) EP 3 747 967 A1

(12) **EUROPEAN PATENT APPLICATION**
published in accordance with Art. 153(4) EPC

(43) Date of publication:
**09.12.2020 Bulletin 2020/50**

(51) Int Cl.:
*C09J 7/00* (2018.01)    *C08J 5/08* (2006.01)
*B32B 27/12* (2006.01)

(21) Application number: **19746717.8**

(22) Date of filing: **23.01.2019**

(86) International application number:
**PCT/CN2019/072782**

(87) International publication number:
**WO 2019/149119 (08.08.2019 Gazette 2019/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.01.2018  CN 201810089532**

(71) Applicants:
• **Nitto Denko (Shanghai Songjiang) Co., Ltd.**
  **Shanghai 201613 (CN)**
• **NITTO DENKO CORPORATION**
  **Ibaraki-shi**
  **Osaka 567-8680 (JP)**

(72) Inventors:
• **LI, Xu**
  **Shanghai 201613 (CN)**
• **WATANABE, Yoshinori**
  **Ibaraki-shi, Osaka 567--8680 (JP)**
• **TIAN, Song**
  **Shanghai 201613 (CN)**
• **LIU, Jifeng**
  **Shanghai 201613 (CN)**

(74) Representative: **Müller-Boré & Partner**
**Patentanwälte PartG mbB**
**Friedenheimer Brücke 21**
**80639 München (DE)**

(54) **ANTI-STICKING ADHESIVE TAPE FOR MOLDING OF COMPOSITE MATERIAL AND MANUFACTURING METHOD THEREFOR AND USE THEREOF**

(57)    Disclosed are an anti-sticking adhesive tape (10) for molding of a composite material and a manufacturing method therefor and the use thereof, the anti-sticking adhesive tape (10) comprising the following sequentially laminated structures: a first layer being a fluorine-containing resin layer (1), a second layer being a first adhesive layer (2), a third layer being a reinforcing material layer (3), and a fourth layer being a second adhesive layer (4), wherein the bonding force between the first layer (1) and a resin (5) for molding of a composite material is smaller than the 180-degree peeling adhesion force of the fourth layer (4), and the intermolecular cohesive force of the first adhesive layer (2) and the intermolecular cohesive force of the second adhesive layer (4) are both larger than the 180-degree peeling adhesion force of the fourth layer (4). The anti-sticking adhesive tape (10) can easily be separated from the resin (5) for molding of a composite material when opening the mold, and can also easily be completely separated from the mold when replacing the adhesive tape, such that the service life of the mold is prolonged, and at the same time, the production efficiency during the molding process of the composite material can be greatly improved.

FIG. 1

**Description**

**TECHNICAL FIELD**

The present disclosure relates to an adhesive tape, and more specifically to an anti-sticking adhesive tape for molding of a composite material. The present disclosure also relates to a manufacturing method for the anti-sticking adhesive tape and use thereof.

**BACKGROUND**

The composite material, in particular the polymer composite material, is a multiphase system solid material compounded by a matrix material and a reinforcing material. The composite material is able to fully exert the characteristics of each component material, and exhibits excellent performances which are not possessed by the original single material. The reinforcing materials for such composite materials include carbon fibers, aramid fibers (Kevlar) and glass fibers, and the matrix material is generally selected from thermoplastic or thermosetting resins such as epoxy resins, cyanate ester resins, phenolic resins, and the like. Among these, the thermosetting resin based composite materials are the most studied and most widely used composite materials today. The thermosetting resin based composite materials have the characteristics of light weight, high strength, large modulus, corrosion resistance, simplicity and convenience in processing and molding and the like, and are widely applied to industries such as the field of wind power generation, and the materials commonly used in the rotor blade are unsaturated polyester resin/glass fiber composite material, epoxy resin/glass fiber composite material, and epoxy resin/carbon fiber composite material.

Currently, to prepare a composite product, a reinforcing material layer is generally introduced into a mold with a suitable configuration, then the resin is injected into the mold containing the reinforcing material and allowed to remain therein for a certain period of time to perform curing. Finally, the mold is opened, and the product is taken out, the mold is cleaned, and a new cycle may be started. Since the resin for the composite material, such as unsaturated polyester and epoxy resin, has certain viscosity, the resin is readily adhered with the mold after being injected and contacted with the mold, and the high temperature in the curing may cause a difficulty in demolding, so that the mold is easily damaged. In order to ensure simple and non-destructive demolding, the mold is usually required to be sprayed with a release agent such as polyvinyl alcohol or silicone wax on its surface before use, but it has the following problems: 1) some common release agents are based on organic solvents, have strong smell and toxicity, and are easy to pollute the environment when being dried and evaporated; 2) due to the presence of the solvents, the release agent requires relatively long drying and curing time, and the release agent needs to be sprayed again before each manufacturing cycle, thereby causing a long downtime before each cycle and greatly affecting production efficiency; 3) in order to apply the release agent uniformly, a high demand is imposed on the surface smoothness of the mold, and if the surface of the mold is not smooth enough, the release agent is not applied uniformly, and the deposition of the resin in the individual portion of the mold easily occurs; and 4) the problem that the release agent is partially transferred to the member easily occurs, which makes the subsequent processing such as surface coating difficult, requiring removal of the releasing agent, which also affects the production efficiency.

Attempts have also been made to use polytetrafluoroethylene (PTFE) coated glass fabrics applied to the mold in the form of a tape to replace the mold release agent. However, bubbles and the like are easily generated under the tape due to the rigidity and poor flexibility of the PTFE-treated glass fabric carrier, and the use of the conventional PTFE-coated glass fabric in the mold easily causes the center of the tape to be impregnated with the liquid resin, resulting in a decrease in cycle service life. Moreover, the pressure-sensitive adhesive used therefor sometimes exhibits a sharp increase in adhesive strength, thereby generating a large force upon peeling, and resulting in difficulty in removing the adhesive tape by a manner that does not leave an adhesive residue from the mold.

The problems are particularly prominent in the manufacturing of large parts (such as structural parts of vehicles, ships, airplanes, satellites, spacecrafts and the like, and large blades for wind power generation), and the production efficiency is seriously influenced by the demoulding problem. Therefore, it is necessary to design the adhesive tape used between the material layer and the mold, so that the adhesive tape is easily separated from the resin for molding of a composite material when the mold is opened and is also completely separated from the mold easily when the adhesive tape is replaced, thereby prolonging the cycle service life of the adhesive tape and improving the overall production efficiency.

**SUMMARY**

Problems to be Solved by the Invention

The object of the present disclosure is to provide an anti-sticking adhesive tape for molding of a composite material, which is easily separated from the resin for molding of a composite material when the mold is opened, and is also completely separated from the mold easily when the adhesive tape is replaced, so that the service life of the mold is prolonged. Another object of the present disclosure is to provide a manufacturing method of the anti-sticking adhesive tape for molding of a composite material, which is simply operated, economical and pollution-free.

Solution for Solving the Problems

The present disclosure provides an anti-sticking adhesive tape for molding of a composite material, the anti-sticking adhesive tape comprises the following sequential laminated structures: a first layer is a fluorine-containing resin layer, a second layer is a first adhesive layer, a third layer is a reinforcing material layer and a fourth layer is a second adhesive layer; wherein a bonding force between the first layer and a resin for molding of a composite material is smaller than a 180-degree peeling adhesion force of the fourth layer, and an intermolecular cohesive force of the first adhesive layer and an intermolecular cohesive force of the second adhesive layer are both larger than the 180-degree peeling adhesion force of the fourth layer.

The anti-sticking adhesive tape according to the present disclosure, wherein the fluorine-containing resin layer comprises one or more of polytetrafluoroethylene resin, perfluoroethylene-propylene copolymer resin, polyvinylidene fluoride resin, perfluoro(alkoxy alkane) resin, and ethylene-tetrafluoroethylene copolymer resin.

The anti-sticking adhesive tape according to the present disclosure, wherein the fluorine-containing resin layer has a thickness of 20 to 200 $\mu$m.

The anti-sticking adhesive tape according to the present disclosure, wherein a ratio of the 180-degree peeling adhesion force of the fourth layer to the bonding force between the first layer and the resin for molding of a composite material is in a range of 3 to 16.

The anti-sticking adhesive tape according to the present disclosure, wherein the first adhesive layer and the second adhesive layer are silicone resin layers with a gel rate of 30 to 60%.

The anti-sticking adhesive tape according to the present disclosure, wherein the first adhesive layer and the second adhesive layer each have a thickness of 5 $\mu$m to 100 $\mu$m, respectively.

The anti-sticking adhesive tape according to the present disclosure, wherein the reinforcing material layer is a glass fiber cloth layer modified by a silicon-containing agent, and the glass fiber cloth has a thickness of 30 $\mu$m to 200 $\mu$m.

The anti-sticking adhesive tape according to the present disclosure, wherein the glass fiber cloth comprises 0.01 wt% to 2 wt% of the silicon-containing agent based on a weight of the glass fiber cloth.

The anti-sticking adhesive tape according to the present disclosure, wherein an amount of the silicon-containing agent is 0.05wt% to 0.5 wt% of the weight of the glass fiber cloth.

The anti-sticking adhesive tape according to the present disclosure, wherein a ratio of the intermolecular cohesive force of the first adhesive layer to the 180-degree peeling adhesion force of the fourth layer is 1.05 to 3.

The anti-sticking adhesive tape according to the present disclosure, wherein the anti-sticking adhesive tape further comprises a release film on the fourth layer and the total thickness of the anti-sticking adhesive tape in addition to the release film is 0.06 to 0.6 mm.

The anti-sticking adhesive tape according to the present disclosure, wherein the resin for molding of a composite material is unsaturated polyester resin or epoxy resin.

The present disclosure further provides a manufacturing method of the anti-sticking adhesive tape according to the present disclosure, comprising the following steps of:

(1) coating a first adhesive on the surface of a fluorine-containing resin;
(2) drying the first adhesive and then attaching a reinforcing material; and
(3) following by coating a second adhesive on the surface of the reinforcing material.

The manufacturing method of the anti-sticking adhesive tape according to the present disclosure, wherein a pressure of 0.05 MPa to 0.5 MPa and a temperature of 30 °C to 150 °C are used in the attaching process.

Moreover, the present disclosure further provides a use of the anti-sticking adhesive tape according to the present disclosure for the molding of the composite material.

Effects of the Disclosure

By adopting the above specific structure, the adhesive tape of the present disclosure adjusts the types and parameters of all layers of the adhesive tape, so that the adhesive tape has good flexibility, thinness, excellent adhesiveness and easy peelability, is suitable for being used as an anti-sticking adhesive tape in the preparation of composite molding materials. The adhesive tape is easily separated from the resin for molding of a composite material when the mold is opened and is also completely separated from the mold easily when the adhesive tape is replaced, such that the adhesive tape has good abrasion performance and long cycle service life, is capable of performing molding and mold opening for more than 100 time, is low in cost and time saving, thereby greatly improving the production efficiency. The adhesive tape is particularly suitable for preparing large composite material parts (such as structural parts of vehicles, ships, airplanes, satellites, spacecrafts and the like, and large blades for wind power generation).

**BRIEF DESCRIPTION OF THE DRAWINGS**

Figure 1 is a schematic cross-sectional view showing an example of an anti-sticking adhesive tape for molding of a composite material of the present disclosure;
Figure 2 is a schematic cross-sectional view showing an example of using an anti-sticking adhesive tape for molding of a composite material.

Description of the Reference Numerals

10 anti-sticking adhesive tape for molding of a composite material

1 fluorine-containing resin layer

2 first adhesive layer

3 reinforcing material layer

4 second adhesive layer

5 resin for molding of a composite material

6 SUS304 stainless-steel plate

**DETAILED DESCRIPTION**

Hereinafter, preferred embodiments of the present disclosure will be described with reference to the drawings. It should be noted that the drawings are merely exemplary, and matters required for implementation of the present disclosure other than those specifically mentioned in the present specification may be grasped as design matters by those skilled in the art based on the prior art in the field. The present disclosure may be carried out based on the contents disclosed in the present specification and the common technical knowledge in the field.

The term "adhesive tape" in the present disclosure encompasses all flat-shaped structures, for example films or film sections extending in two dimensions, tapes with an extended length and a limited width, tape sections, etc., and finally also die-cut pieces or labels. The adhesive tape may have a form in which sheets are laminated, i.e., a film, or may have a form in which it is wound in a roll form, i.e., wound on itself in the form of an Archimedean spiral, or may be manufactured by covering the adhesive side with a separate material such as a siliconized paper or a siliconized film, if necessary but not necessary.

[Anti-sticking adhesive tape for molding of a composite material]

<Anti-sticking adhesive tape>

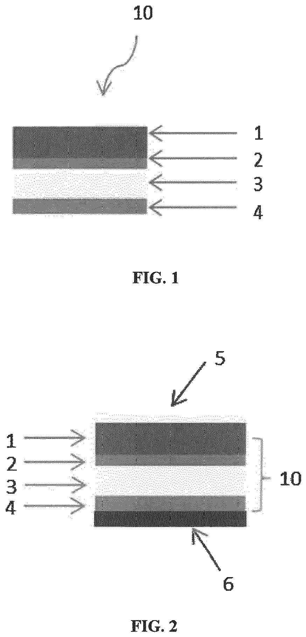

As shown in Figures 1 and 2, the anti-sticking adhesive tape 10 of the present disclosure comprises the following sequential laminated structures: a first layer is a fluorine-containing resin layer 1, the second layer is a first adhesive layer 2 formed on the fluorine-containing resin layer 1, the other surface of the first adhesive layer 2 is bonded to a third layer, i.e., a reinforcing material layer 3, the other surface of the reinforcing material layer 3 is bonded to a fourth layer, i.e., a second adhesive layer 4, and the anti-sticking adhesive tape 10 may further include a release film on the outer side of the fourth layer (second adhesive layer 4) as required.

While using, a bonding force between the first layer (fluorine-containing resin layer 1) and the resin for molding of a composite material 5 is smaller than a 180-degree peeling adhesion force between the fourth layer (second adhesive layer 4) and a SUS304 stainless-steel plate 6, and an intermolecular cohesive force of the first adhesive layer 2 and an intermolecular cohesive force of the second adhesive layer 4 are both larger than the 180-degree peeling adhesion force between the fourth layer (second adhesive layer 4) and the SUS304 stainless-steel plate 6.

The total thickness of the anti-sticking adhesive tape in addition to the release film is 0.06 mm to 0.6 mm, preferably 0.1 mm to 0.4 mm. The anti-sticking adhesive tape in the above thickness range meets the requirement of thinning, is easy to be attached to a complex curved surface of a mold simultaneously, and may also be laid and attached in place at one time at the corner position of the mold.

<Fluorine-containing resin layer>

The fluorine-containing resin layer mainly utilizes the lower surface energy of the fluorine-containing resin, reducing the bonding force between the surface of the adhesive tape and the resin for molding of a composite material, so that the fluorine-containing resin layer has release property and abrasion resistance. The fluorine-containing resin layer is mainly constituted by fluorine-containing resin, and the fluorine-containing resin is not particularly limited, which, for example, is one or more of polytetrafluoroethylene (PTFE), perfluoro(alkoxy alkane) (PFA), perfluoroethylene-propylene copolymer (FEP), ethylene-tetrafluoroethylene copolymer (ETFE), polyvinylidene fluoride (PVdF). The fluorine-containing resin layer may also include additional polymer, wherein a good miscibility with other polymers must be provided by the fluorine-containing resin, and suitable polymers include olefin-based polymer, polyester, and the like. In the present disclosure, a PTFE film is preferably used as the fluorine-containing resin layer, since the friction coefficient of PTFE is extremely low, the bonding force between the surface of the adhesive tape and the resin for molding of a composite material such as epoxy resin may be greatly reduced. The use of the PTFE film facilitates separation of the resin from the mold during mold opening, whether for the tacky resin at the initial stage of molding or for the resin after high-temperature curing. Also, the PTFE film is also excellent in weather resistance, and therefore long-term reliability of the tape is ensured. Such a film may be obtained as, for example, No.7991 manufactured by Japan Valqua Co., Ltd.(日本バルカー工業社) and No.900 manufactured by Nitto Denko Corporation.

It should be noted that the lower surface energy of the fluorine-containing resin layer may also cause problems with its adhesion to the other layers of the adhesive tape. In order to improve an anchoring force between the fluorine-containing resin layer and the other layers of the adhesive tape, the other surface of fluorine-containing resin layer, which is remote from the surface of the adhesive tape, may generally be subjected to a modification treatment to enhance its adhesive properties. The surface modification methods of the fluorine-containing resin layer mainly include sodium treatment, corona discharge treatment, sputter etching process, spray treatment, radiation grafting method, ion beam implantation method, laser treatment, and the like. The sodium treatment is to immerse the fluororesin film main body in liquid ammonia or a naphthalene solution of sodium metal. The C-F bond is broken, partial fluorine atoms on the surface are torn off, a carbonized layer is left on the surface, and certain polar groups are introduced, so that the surface energy of the polymer is increased, and the wettability is improved. The corona discharge treatment is a treatment in which a needle-like or blade-like electrode and a counter electrode are discharged to put a fluororesin film body between the electrodes and an oxygen-containing functional group such as aldehyde, acid, alcohol, peroxide, ketone, ether or the like is generated on the surface of the fluororesin film body. From the viewpoint of operability, cost and the like, the sodium treatment treated with sodium metal/naphthalene solution is preferably used in one embodiment of the present disclosure, and the treatment is carried out without low temperature of about -50 °C. The surface tension of the fluorine-containing resin layer after treatment is preferably 45mN/m or more, and by making the surface tension within the above range, the adhesion between the fluorine-containing resin layer and the first adhesive layer may be improved. The surface tension is measured according to the measuring method of the standard GB/T 14216-2008 or ISO 8296:2003.

Since the fluorine-containing resin layer is directly contacted with the resin for molding of a composite material, the thickness of the fluorine-containing resin layer has a close relation to the cycle service life of the adhesive tape. Preferably, the thickness of the fluorine-containing resin layer is 20 to 200μm. When the thickness is smaller than 20 μm, the thickness of the fluorine-containing resin layer is too thin, so that the internal glass fibers are easily exposed after abrasion and are soaked by liquid resin, thereby reducing the cycle service life; when the thickness is larger than 200μm, the thickness of the fluorine-containing resin layer is too thick, resulting in poor processability during the use of the adhesive tape and increased use cost. Comprehensively considering the requirements of cost and adhesive tape cycle service life, the thickness of the fluorine-containing resin layer is further preferably 25 to 200μm, and more preferably 50 to 100μm.

<First adhesive layer and Second adhesive layer>

The primary function of the first adhesive layer of the present disclosure is to bond the fluorine-containing resin layer and the reinforcing material layer, and the primary function of the second adhesive layer is to bond the reinforcing material layer and an adherend. While using, the fourth layer (i.e., second adhesive layer) of the anti-sticking adhesive tape of the present disclosure is adhered to the adherend.

For the specific selection of the adhesive, the following conditions need to be satisfied: 1) the bonding force between the fluorine-containing resin layer and the resin for molding of a composite material is smaller than the 180-degree peeling adhesion force of the second adhesive layer; 2) the intermolecular cohesive force of the first adhesive layer and the intermolecular cohesive force of the second adhesive layer are both larger than the 180-degree peeling adhesion force of the second adhesive layer. Only when these conditions are met, the adhesive tape is capable of easily separating from the resin for molding of a composite material when the mold is opened, and is capable of separating from the mold easily when the adhesive tape needs to be replaced.

The adhesive of the first adhesive layer and the second adhesive layer may be one selected from known adhesives and satisfying the above conditions. The adhesive of the first adhesive layer and the second adhesive layer may be the same or different. Specific examples of the adhesive may include known adhesives of a polyurethane-based adhesive, an acrylic adhesive, a rubber-based adhesive, a silicone-based adhesive, a polyester-based adhesive, a polyamide-based adhesive, an epoxy-based adhesive, a vinylalkyl ether-based adhesive, and a fluorine-based adhesive. The adhesive may be used alone, or may be used two or more thereof in combination. The adhesive may be in any form, for example, an emulsion-type adhesive, a solvent-type adhesive, a hotmelt-type adhesive, and the like.

Considering the complicated conditions of the composite material molding reaction, the silicone-based adhesive with good heat resistance, weather resistance, and chemical resistance is preferred in the present disclosure. Further, the first adhesive layer and the second adhesive layer of the present disclosure are preferably both silicone resin layers, and in order to improve the characteristic of maintaining the adhesive force at high temperature, the silicone resin layer more preferably mainly includes a peroxide-curable silicone adhesive. The composition of the peroxide-curable silicone adhesive is not particularly limited as long as it contains a peroxide curable silicone rubber and/or a partial condensate thereof. The peroxide-curable silicone adhesive is, for example, an organopolysiloxane having dimethylsiloxane as a main constituent unit. Hydroxyl groups or other functional groups may be introduced into the organopolysiloxane as required. The organopolysiloxane is, for example, polydimethylsiloxane or polymethylphenylsiloxane; a copolymer of dimethylsiloxane and diphenlsiloxane; a copolymer of dimethylsiloxane and methylphenylsiloxane; a terpolymer of dimethylsiloxane, metylvinylsiloxane and diphenylsiloxane and the like, and other polymers may include polyethylmethylsiloxane, polydiethylsiloxane, polyethylphenylsiloxane, polymethylvinylsiloxane, polydiphenylsiloxane, or copolymers thereof. The organopolysiloxane may be terminated at an end by, for example, triorganosiloxy units(e.g., trimethylsiloxane, dimethylvinylsiloxane, dimethylphenylsiloxane, etc.). The terminal group may further include a hydroxyl terminated polydiorganosiloxane. The molecular structure of the organopolysiloxane may be linear, linear with partially branched, cyclic, branched, or the like. Specific examples of the organopolysiloxane include KR-3006A/BT manufactured by Shin-Etsu Chemical Co., Ltd., SH 4280PSA manufactured by Toray Dow Corning Corporation Silicone, and the like. When the above organopolysiloxane is used, the weight-average molecular weight is not particularly limited, and the weight-average molecular weight is usually 180,000 or more, preferably 280,000 to 1,000,000, more preferably 500,000 to 900,000. If the weight-average molecular weight is less than 180,000, sometimes the adhesive force required for the adhesive may not be exhibited, and if the weight-average molecular weight is greater than 1,000,000, because the adhesive viscosity increases, and sometimes there may be a problem such as poor coatability. The adhesive layer further includes an organic peroxide curing agent, and the organic peroxide curing agent is not particularly limited as long as the compound generates free oxygen radicals by decomposition, for example: benzoyl peroxide, tert-butyl peroxybenzoate, dicumyl peroxide, tert-butylcumylperoxide, di-tert-butyl peroxide, 2,5-dimethyl-2,5-di(tert-butylperoxy)hexane, and the like. The amount of the organic peroxide curing agent is 1.5 to 3 parts by weight relative to 100 parts by weight of the peroxide-curable silicone resin. When the amount of the curing agent is lower than the lower limit, the cohesive force of the adhesive composition is insufficient, and when the amount of the curing agent exceeds the upper limit, the cohesive force is excessive and the load bearing durability in a high-temperature environment is reduced.

The gel rate may influence the bonding force of the adhesive tape, the gel rate (gel fraction) of the first adhesive layer and the second adhesive layer in the present disclosure is preferably 30 to 60%, more preferably 40 to 50%, and the gel rate of the first adhesive layer and the second adhesive layer may be the same or different. By controlling the gel rate within the above range, the adhesive may have an appropriate cohesive strength, and the recycling resistance of the adhesive tape may be improved. The thickness of the first adhesive layer and the second adhesive layer is not particularly limited in the present disclosure, for example, the thickness may be 5 $\mu$m to 100 $\mu$m, more preferably 8$\mu$m to 70$\mu$m, and particularly preferably 10$\mu$m to 45$\mu$m, respectively. When the thickness of the adhesive layer is within the above range, an appropriate adhesive force may be exerted.

<Reinforcing material layer>

The reinforcing material layer is mainly used for providing enough mechanical strength for the adhesive tape, and is preferably modified or unmodified glass fiber cloth. The glass fiber cloth is a fabric obtained by weaving glass fiber yarns, and it has high temperature resistance and high strength. The glass fiber yarn used as the glass fiber fabric is usually formed by pulling and aligning glass fibers having a diameter of about several microns in units of several hundred. The characteristics of the glass fiber cloth are determined by fiber properties, warp and weft density, yarn structure and texture. The warp and weft density is determined by the yarn structure and texture. The warp and weft density plus the yarn structure determines the physical properties of the fabric, such as weight, thickness, breaking strength, and the like. The basic texture is plain, twill, satin, rib and basket. The type and the configuration of the glass fiber cloth are not particularly limited. For example, it is preferable to use a glass fiber plain fabric having a basis weight of 15 to 110g/m$^2$, and the warp and weft density of 10 to 100/25mm in the warp direction and the weft direction. The glass fiber cloth may be split before use to improve the effect of the subsequent silicon-containing treatment process. The thickness of the glass fiber cloth is preferably 30$\mu$m to 200$\mu$m, further preferably 50$\mu$m to 130$\mu$m, and the thickness within the above range may satisfy the balance of the mechanical properties and the processability of the adhesive tape.

In a specific embodiment according to the present disclosure, the reinforcing material layer is preferably a glass fiber cloth layer modified by a silicon-containing agent. The silicon-containing agent has a great influence on the flattening performance of the fluorine-containing resin material on the surface of the glass fiber cloth and the internal immersion performance of the fluorine-containing resin material. Silicon-containing agent treatment is a process of treating the glass fiber cloth with a silicon-containing agent. The silicon-containing agent may be a class of organosilicon compounds containing two groups having different chemical properties in one molecule, and its structural formula may be represented by a general formula YSiX$_3$. In the formula, Y is a non-hydrolyzable group, including an alkenyl group (mainly a vinyl group), and a hydrocarbon group having a functional group such as Cl,NH$_2$, -SH, an epoxy group, N$_3$, (meth)acryloyloxy group, isocyanate group and the like at the end, that is, a carbon functional group; X is a hydrolyzable group, including Cl, OCH$_3$, OCH$_2$CH$_3$, OC$_2$H$_4$OCH$_3$, OSi(CH$_3$)$_3$ and the like. In order to improve the internal bonding force of the adhesive tape in the present disclosure, the amount of the silicon-containing agent is 0.01 wt% to 2 wt%, preferably 0.05 wt% to 0.5 wt% based on the total weight of the glass fiber cloth. The glass fiber cloth treated by the silicon-containing agent with the amount in the above range may enhance the bonding between the glass fiber cloth and the first and second adhesive layers.

<Bonding force, 180-degree peeling adhesion force, and Intermolecular cohesive force>

The bonding force, 180-degree peeling adhesion force, and intermolecular cohesive force are measured according to JIS C2107. Specifically, in a specific embodiment according to the present disclosure, the 180-degree peeling strength (N/19mm) of the different layers is measured with a tensile tester at a tensile rate of 300 mm/min.

In the present disclosure, the bonding force between the fluorine-containing resin layer and the resin for molding of a composite material is smaller than the 180-degree peeling adhesion force of the second adhesive layer, and the intermolecular cohesive force of the first adhesive layer and the intermolecular cohesive force of the second adhesive layer are both larger than the 180-degree peeling adhesion force of the second adhesive layer.

Preferably, in the present disclosure, a ratio of the 180-degree peeling adhesion force of the second adhesive layer to the bonding force between the first layer and the resin for molding of a composite material is in a range of 3 to 16, preferably 5 to 14. The preferred range of the ratio varies depending on different resins for molding of a composite materials, when the resin for molding of a composite material is an epoxy resin, this ratio range is preferably 9 to 13; when the resin for molding of a composite material is an unsaturated polyester resin, this ratio range is preferably 5.5 to 9. The present inventors have found that when the ratio is controlled within the above range, the adhesive tape is able to be easily separated from the resin for molding of a composite material when the mold is opened, and is able to be completely separated from the mold when replacement of the adhesive tape is required. When the ratio is lower than 3, the adhesive force between the adhesive tape and the mold is weak, and the adhesive tape may be torn when the mold is opened to separate the resin, which affects the cycle service life. When the ratio is higher than 16, the adhesive force of the tape to the mold is too high, and the adhesive tape is liable to remain when it needs to be replaced.

Preferably, the intermolecular cohesive force of the first adhesive layer and the intermolecular cohesive force of the second adhesive layer are both larger than the 180-degree peeling adhesion force of the second adhesive layer. Among them, the ratio of the intermolecular cohesive force of the first adhesive layer to the 180-degree peeling adhesion force of the second adhesive layer is 1.05 to 3, preferably 1.1 to 2. This ratio range is able to ensure that the bonding strength of the first layer and the second layer of the adhesive tape is moderate, the bonding is tight, and meanwhile, obvious excessive cohesive force does not occur.

In a specific embodiment according to the present disclosure, the bonding force between the fluorine-containing resin layer and the resin for molding of a composite material is 0.5N/19mm to 1N/19mm, and the 180-degree peeling adhesion force of the second adhesive layer is preferably 5N/19mm to 7N/19mm, and the intermolecular cohesive force of the first adhesive layer is not less than 6N/19mm.

<Composite material molding>

In order to ensure simple and non-destructive demolding, the anti-sticking adhesive tape of the present disclosure may be used in a mold presenting a female stamp and optionally a male stamp of the object to be built during the composite material molding process. The anti-sticking adhesive tape of the present disclosure may be applied to different composite material molding methods, and examples of these methods are RTM (resin transfer molding) and VRTM (vacuum assisted resin transfer molding). The anti-sticking adhesive tape of the present disclosure has low adhesive force to unsaturated polyester resins or epoxy resin, and good release property, therefore, the resin for molding of a composite material of the present disclosure is preferably an unsaturated polyester resin or an epoxy resin. The type and the molecular weight and the like of the resin for molding of a composite material of the present disclosure are not particularly limited, and known resins used as molding materials in this technical field may be used. The unsaturated polyester resin is generally a resin obtained by dissolving a compound obtained by polycondensation and esterification of a polyol and an unsaturated polybasic acid or a saturated polybasic acid in a crosslinking agent. Examples of the epoxy resin include bisphenol A-type epoxy resin; bisphenol F-type epoxy resin; hydrogenated bisphenol A-type epoxy resin; hydrogenated bisphenol F-type epoxy resin; naphthalene-type epoxy resin; fluorene-type epoxy resin; bisphenol S-type epoxy resin; cycloaliphatic epoxy resin, and perfluorinated epoxy resin. These compounds may be used alone, or may be used in combination.

In a specific embodiment according to the present disclosure, the adherend is a mold used for molding composite material. In the present disclosure, the material of the mold is not particularly limited, and any of hard, soft, and mixed molds such as stainless steel and unsaturated polyester may be used.

[Manufacturing method of the anti-sticking adhesive tape for molding of a composite material]

A manufacturing method of the anti-sticking adhesive tape for molding of a composite material of the present disclosure comprises the following steps of:

(1) coating a first adhesive on the surface of a fluorine-containing resin;
(2) drying the first adhesive and then attaching a reinforcing material; and
(3) following by coating a second adhesive on the surface of the reinforcing material.

<Step one: Coating a first adhesive on the surface of a fluorine-containing resin>

In an embodiment according to the present disclosure, it is preferable that the surface of the fluorine-containing resin is first modified, the first adhesive is coated on the treated surface, a high-temperature crosslinking reaction is performed after the coating, and the drying treatment is performed after the reaction.

Preferably, the first adhesive is peroxide-curable silicone resin, the temperature of the high-temperature crosslinking reaction is 150 to 240°C. In the present disclosure, the method for coating the surface of the fluorine-containing resin is not particularly limited, and known coating methods such as coating using a gravure roll coater, reverse roll coater, bar coater, blade coater, etc., screen coating, dip coating, and cast coating may be used. Although not particularly limited, the thickness of the adhesive coating may be set so that the thickness of the adhesive layer formed after drying is $5\mu m$ to $100\mu m$. The mass of the first adhesive applied to the fluorine-containing resin film is 15 to $100g/m^2$, preferably 40 to $70g/m^2$, the above amount of the adhesive may ensure a good bonding force between the fluorine-containing resin layer and reinforcing material layer of the adhesive tape of the present disclosure. Drying may be carried out at room temperature, however, in order to promote the crosslinking reaction, drying is preferably carried out under heating, and the drying temperature of about 40 to 120°C may be used.

<Step two: Drying the first adhesive and then attaching a reinforcing material>

It is preferable that the glass fiber cloth is firstly treated by the silicon-containing agent, then is attached to the first adhesive layer of the product obtained in the step one, and is heated for hot-press attachment.

Preferably, the pressure of 0.05 MPa to 0.5 MPa and the temperature of 30 °C to 150 °C are used in the attaching process, more preferably, the temperature of hot-press attachment is 60°C to 150°C. The heating time is, for example, 0.5 seconds to 1 minute, preferably 1 second to 20 seconds.

<Step three: Coating a second adhesive on the surface of the reinforcing material>

The second adhesive is coated on the surface of the glass fiber cloth of the product obtained in the step two, and the coating method is the same as the coating method in the step one, a high-temperature crosslinking reaction is performed after the coating, and the drying treatment is performed after the reaction.

Preferably, the second adhesive is peroxide-curable silicone resin, the temperature of the high-temperature crosslinking reaction is 150 to 240 °C. From the viewpoint of protecting the surface of the adhesive tape and preventing adhesion when the adhesive tape is in a sheet form, a layer of the release film may be provided on the surface of the layer containing the second adhesive layer, and when the anti-sticking adhesive tape of the present disclosure bonded to an adherend is peeled off, the release film is optionally provided. The release film is not particularly limited, known and conventional releasing paper and the like may be used. The release film may be suitably selected and used from known release films, for example, a substrate having a release layer, such as a plastic film, a paper, and the like, that is surface-treated with a release agent such as silicone-based, long-chain alkyl-based, fluorine-based or molybdenum sulfide-based release agent, may be used; a low-adhesion base material formed of fluorine-based polymer such as polytetrafluoroethylene, polychlorotrifluoroethylene, polyvinyl chloride, polyvinylidene fluoride, tetrafluoroethylene-hexafluoropropylene copolymer, chlorofluoroethylene-vinylidene chloride copolymer; a low-adhesion base material formed of non-polar polymer such as olefin-based resins (e.g., polyethylene and polypropylene); or a release film (polyolefin, polyvinyl chloride, etc.) with surface treated to reduce contact area with the adhesive, and the like.

Drying may be carried out at room temperature, however, in order to promote the crosslinking reaction, drying is preferably carried out under heating, and the drying temperature of about 40 to 120 °C may be used.

[Use of the anti-sticking adhesive tape for molding of a composite material]

The anti-sticking adhesive tape of the present disclosure has low adhesive force to composite materials, particularly unsaturated polyester or epoxy resin, and good release property, thus the anti-sticking adhesive tape may be used in the molding process of the composite materials, and is suitable for preparing large parts with relatively complex geometric structures, such as automobile parts, rotor blades and the like. The anti-sticking adhesive tape of the present disclosure may be in the form of a sheet or a curl.

The anti-sticking adhesive tape of the present disclosure may replace the release agent of the mold, and may be directly adhered on the mold for use, thereby providing a good balance of bonding strength and residue-free separability. For the molding process of unsaturated polyester or epoxy resin composite materials, the curing temperature is 50 to 100°C, and the unsaturated polyester or epoxy resin composite material is molded after being solidified under the vacuum of 0.01 MPa or normal pressure. The adhesive tape of the present disclosure is capable of forming a sufficient bonding force during the first manufacturing cycle of the molding process of the composite materials so that the tape will not be torn when the resin is released. The bonding force is slightly strengthened in the subsequent cycle so that the tape is adhered firmly and may be peeled off from the mold without difficulty at the end of its service life in the mold without leaving any residue.

Examples

The present disclosure will be explained based on the following examples, which can be understood by those skilled in the art, and the examples are merely illustrative and not exhaustive.

In the examples,

(1) measurements for the bonding force between the first layer and the resin for molding of a composite material, the 180-degree peeling adhesion force of the fourth layer or the second adhesive layer, and the intermolecular cohesive force of the first adhesive layer and the intermolecular cohesive force of the second adhesive layer:

the bonding force between the first layer and the resin for molding of a composite material was measured in the following way: a semi-cured resin(epoxy resin or unsaturated polyester)in a viscose state, to which the curing agent had been added therein, was coated on the surface of the adhesive tape(width: 19mm), and the adhesive tape was heated at 100 °C under normal pressure to prepare an adhesive tape after curing. Then, the peeling strength between the first layer of the adhesive tape and the resin was measured using a tensile tester (manufactured by Minebea Co., Ltd., model TG-1KN) at a tensile rate of 300mm/min to obtain the bonding force.

In addition, the adhesive tape(width: 19 mm) was cut into an appropriate length, and was pressure-bonded to a SUS304 stainless-steel plate by reciprocating a 2kg roller once under an atmosphere of 23 °C and 50% RH. The resultant was left to stand under an atmosphere of 23 °C and 50% RH for 30 minutes, and then the 180-degree peeling strength (N/19 mm) and intermolecular cohesive force of the different layers were measured using a tensile tester (manufactured by Minebea Co., Ltd., model TG-1KN) at a tensile rate of 300 mm/minute according to JIS C2107.

The 180-degree peeling adhesion force of the second adhesive layer was obtained by peeling the second adhesive layer 180 degrees from the SUS304 stainless-steel plate.

The measurement for the intermolecular cohesive force of the first adhesive layer: the fluorine-containing resin layer was peeled from the first adhesive layer, and the adhesive force between the fluorine-containing resin layer and the first adhesive layer was measured to obtain the intermolecular cohesive force of the first adhesive layer.

The intermolecular cohesive force of the second adhesive layer was qualitatively determined by: that is, after the 180-degree peeling adhesion force of the fourth layer (i.e., the second adhesive layer) of the adhesive tape was measured, the state of the adhesive tape peeled from the SUS304 stainless-steel plate was visually evaluated, and if there was no tape remaining on the SUS304 stainless-steel plate and no defect point on the surface of the adhesive layer of the tape, it was determined that the intermolecular cohesive force of the second adhesive layer was greater than the 180-degree peeling adhesion force thereof.

(2) The gel rate of the adhesive layer was measured by the following methods:

About 0.1g of the cured adhesive composition, such as the adhesive layer obtained from the adhesive tape, was wrapped in a porous polytetrafluoroethylene (PTFE) sheet having an average pore diameter of 0.2 $\mu$m, a porosity of 75% and a thickness of 85 $\mu$m, and then bound with kite string to prepare a measurement sample. Next, the weight of the prepared measurement sample was measured, and this weight was defined as a weight before impregnation C. The weight before impregnation C was the total weight of the adhesive layer, the polytetrafluoroethylene sheet and the kite string. Furthermore, the total weight of the PTFE sheet and the kite string was measured in advance as a package weight B. Next, the measurement sample was collected in a container having an internal volume of 50mL and filled with toluene, and the sample was left to stand at 23 °C for 7 days. Next, the inside of the container was washed together with the measurement sample with toluene, and then the measurement sample was taken out of the container and transferred into an aluminum cup, and the sample was dried at 130°C for 2 hours to remove toluene. Then, the weight of the measurement sample, from which toluene was removed, was measured, and this weight was defined as a weight after impregnation A. The gel rate may be calculated by the following formula.

$$\text{gel rate(weight\%)} = (A-B)/(C-B) \times 100$$

(3) Residual adhesive performance of mold

The product was attached to an SUS304 stainless-steel plate, a weight of 5kg was flatly pressed, the plate was left in an environment of 200 °C for 5 hours, and after cooling, the tape was peeled off to confirm whether or not there was any residual adhesive on the SUS304 stainless-steel plate. The tape was determined to be defective when the residual adhesive was observed visually.

(4) Evaluation of release durability

The abrasion resistance test method and the release property test were used for evaluation, and the details were as follows: the adhesive tape of the present disclosure was continuously abraded using a Taber's abrasion resistance tester (conditions: weight of 500g, 72 rpm), and then whether the fluorine-containing resin layer on the outermost surface was consumed or not and whether the first adhesive layer was exposed or not was observed using a microscope at 150 x magnification. The longer time indicated the better durability. If the exposure was found within 150 minutes, the durability was determined to be poor, the durability was determined to be good from 150 minutes to 300 minutes, and the durability was determined to be excellent at more than 300 minutes.

(5) Evaluation of comprehensive effect

The evaluation of the comprehensive effect was given according to the results obtained from the (3) and (4), the excellent comprehensive effect was marketed as ◎; the good comprehensive effect was marked as ○; and the poor comprehensive effect was marked as X.

Example 1

The fluorine-containing resin PTFE film (No.900 manufactured by Nitto Denko Corporation, thickness: 50$\mu$m) was impregnated with a treatment liquid containing sodium metal (manufactured by Junkosha, fluororesin etchant(Tetra-Etch)) for 5 seconds, and one surface of the film was subjected to chemical surface modification treatment, and thereafter the film was taken out from the treatment liquid and washed with acetone and water.

The coating of the first adhesive, i.e., peroxide-curable silicone resin (No.7355 produced by Dow Corning Corporation) was performed on the treated surface, and the peroxide-curable silicone resin was a silicon-containing resin obtained by using benzoyl peroxide as curing agent. After coating, the coated adhesive was subjected to a high-temperature crosslinking reaction at 220 °C for 2 minutes, so that the coated adhesive was cured, and the gel rate of the silicon-containing resin layer after drying was 40% and thickness was 50 $\mu$m.

Then, the glass fiber plain fabric modified by a silicon-containing agent (thickness: 50 $\mu$m) was attached to the silicon-containing resin layer by hot pressing at 80 °C and the pressure was 0.1 MPa. The amount of the silicon-containing agent was 0.05wt% of the total weight of the glass fiber plain fabric.

Then, the surface of the glass fiber plain fabric was coated with a layer of the second adhesive layer (i.e., peroxide-curable silicone resin, No.7355 produced by Dow Corning Corporation) again, and the coated adhesive was cured by heating at 220 °C for 3 minutes, thereafter, the adhesive was dried at 60 °C to obtain a silicon-containing resin layer with a gel rate of 50% and a thickness of 50 $\mu$m. Finally, a release film was attached to the surface of the silicon-containing resin layer for protection. The thickness of the produced adhesive tape (excluding the release film) was 0.2mm.

Example 2

The procedure of Example 1 was repeated. The difference was that: a fluorine-containing resin PTFE film with a thickness of 100 $\mu$m was used.

Example 3

The procedure of Example 1 was repeated. The difference was that: the amount of the silicon-containing agent was 0.2wt% of the total weight of the glass fiber plain fabric.

Example 4

The procedure of Example 1 was repeated. The difference was that: the temperature and the time of the high-temperature crosslinking reaction for the first adhesive were changed (200 °C, 5minutes, respectively) to obtain a silicon-containing resin layer with a gel rate of 60%.

Example 5

The procedure of Example 1 was repeated. The difference was that: the temperature and the time of the high-temperature crosslinking reaction for the second adhesive were changed (200 °C, 3minutes, respectively) to obtain a silicon-containing resin layer with a gel rate of 45%.

Example 6

The procedure of Example 1 was repeated. The difference was that: a fluorine-containing resin PTFE film with a thickness of 15 $\mu$m was used.

Comparative Example 1

The procedure of Example 1 was repeated. The difference was that: the glass fiber plain fabric was not treated with a silicon-containing agent.

Comparative Example 2

The procedure of Example 1 was repeated. The difference was that: the amount of the silicon-containing agent was 2.5wt% of the total weight of the glass fiber plain fabric. Comparative Example 3

The procedure of Example 1 was repeated. The difference was that: the temperature and the time of the high-temperature crosslinking reaction for the first adhesive were changed (130 °C, 3minutes, respectively)to obtain a silicon-containing resin layer with a gel rate of 20%.

Comparative Example 4

The procedure of Example 1 was repeated. The difference was that: the temperature and the time of the high-temperature crosslinking reaction for the second adhesive were changed (120 °C, 3 minutes, respectively) to obtain a silicon-containing resin layer with a gel rate of 15%.

Comparative Example 5

The same single-side sodium-treated fluorine-containing resin PTFE film (thickness: 50 $\mu$m) as in Example 1 was used, and a (meth)acrylic adhesive was coated on the treated surface (see Example 1 of CN104861889A), as a result, the adhesive tape was obtained after drying, and the thickness of the obtained adhesive tape was the same as in Example 1. The difference was that: the gel rate of the first adhesive layer (silicon-containing resin layer) and the second adhesive layer were 45%.

Comparative Example 6

The single-side corona-treated PET film (thickness: 25$\mu$m) was used, the first adhesive layer was coated on the treated surface, and other procedures and the thickness of the adhesive tape were the same as in Example 1.

Evaluation of Properties

For the adhesive tapes produced in the Examples and Comparative Examples respectively, the following were measured:

the bonding force between the first layer of the adhesive tape, namely fluorine-containing resin layer, and the epoxy resin (indicated as bonding force A);
the bonding force between the first layer of the adhesive tape, namely fluorine-containing resin layer, and the unsaturated polyester (indicated as bonding force B);
the 180-degree peeling adhesion force of the fourth layer of the adhesive tape (indicated as bonding force C);
the intermolecular cohesive force of the first adhesive layer of the adhesive tape (indicated as cohesive force A); and
qualitatively determining the magnitude of the intermolecular cohesive force of the second adhesive layer of the adhesive tape (indicated as cohesive force B) and the 180-degree peeling adhesion force thereof (i.e., bonding force C).

Also, the residual adhesive performance of the mold and the effect of the release durability were determined to give evaluations of comprehensive effects. Results were shown in Table 1 (the unit of the bonding force and the cohesive force was N/19mm):

Table 1

| | Thickness of the fluorine-containing resin layer μm | Amount of the silicon-containing agent wt% | Gel rate of the first adhesive layer % | Gel rate of the second adhesive layer % | Bonding force A | Bonding force B | Bonding force C | Bonding force C/ Bonding force A | Bonding force C/ Bonding force B | Cohesive force A | Cohesive force A/ Bonding force C | Strength of cohesive force B and bonding force C | Presence or absence of the residual adhesive | Durability | Comprehension effect |
|---|---|---|---|---|---|---|---|---|---|---|---|---|---|---|---|
| Example 1 | 50 | 0.05 | 40 | 50 | 0.5 | 0.9 | 5 | 10 | 5.6 | 7 | 1.4 | > | No | Good | ◎ |
| Example 2 | 100 | 0.05 | 40 | 50 | 0.5 | 0.9 | 6.5 | 13 | 7.2 | 7 | 1.1 | > | No | Excellent | ◎ |
| Example 3 | 50 | 0.2 | 40 | 50 | 0.6 | 0.9 | 5 | 8.3 | 5.6 | 9 | 1.8 | > | No | Good | ◎ |
| Example 4 | 50 | 0.05 | 60 | 50 | 0.6 | 0.9 | 5 | 8.3 | 5.6 | 6 | 1.2 | > | No | Good | ◎ |
| Example 5 | 50 | 0.05 | 40 | 45 | 0.6 | 0.9 | 5.5 | 9.2 | 6.1 | 7 | 1.3 | > | No | Good | ◎ |
| Example 6 | 15 | 0.05 | 40 | 50 | 0.6 | 0.9 | 4.8 | 8 | 5.3 | 7 | 1.5 | > | No | Poor | ○ |
| Comparative Example 1 | 50 | 0 | | 50 | 0.6 | 0.9 | 5.5 | 9.2 | 6.1 | 5 | 0.9 | > | Interlayer peeling of the product NG | Good | × |
| Comparative Example 2 | 50 | 2.5 | 40 | 50 | 0.6 | 0.9 | 5.5 | 9.2 | 6.1 | 4 | 0.7 | < | Interlayer peeling of the product NG | Good | × |
| Comparative Example 3 | 50 | 0.05 | 20 | 50 | 0.6 | 0.9 | 5.5 | 9.2 | 6.1 | 3 | 0.5 | > | Interlayer peeling of the product NG | Good | × |
| Comparative Example 4 | 50 | 0.05 | 40 | 15 | 0.6 | 0.9 | 8.5 | 14.2 | 9.4 | 7 | 0.8 | < | Yes, poor | Good | × |
| Comparative Example 5 | 50 | 0.05 | 45 | 45 | 0.6 | 0.9 | 9 | 15 | 10 | 6 | 0.7 | > | Yes, poor | Good | × |

(continued)

| | Thickness of the fluorine-containing resin layer μm | Amount of the silicon-containing agent wt% | Gel rate of the first adhesive layer % | Gel rate of the second adhesive layer % | Bonding force A | Bonding force B | Bonding force C | Bonding force C/ Bonding force A | Bonding force C/ Bonding force B | Cohesive force A | Cohesive force A/ Bonding force C | Strength of cohesive force B and bonding force C | Presence or absence of the residual adhesive | Durability | Comprehension effect |
|---|---|---|---|---|---|---|---|---|---|---|---|---|---|---|---|
| Comparative Example 6 | 0 | 0.05 | 40 | 50 | 10 | 12 | 5 | 0.5 | 0.4 | 7 | 1.4 | > | No | Poor | × |

From the experimental results, it was understood that the overall evaluation performance of the anti-sticking adhesive tape satisfying the requirements of the present disclosure was good, and the durability was affected to a certain extent by the relatively small thickness of the fluorine-containing resin layer in Example 6, but compared with the treated PET film used in Comparative Example 6, the durability of the fluorine-containing resin PTFE film was better than that of the PET film. As could be seen from the above Examples and Comparative Examples, in the present disclosure, the intermolecular cohesive force of the adhesive layer of the adhesive tape and the bonding force between the adhesive tape and the resin and mold were adjusted by changing the thickness of the fluorine-containing resin layer, the amount of the silicon-containing agent in the reinforcing material layer, the gel rate of the adhesive, and the like. It was found that when the bonding force C was greater than the bonding forces A and B and the cohesive forces A and B were both greater than the bonding force C, an adhesive tape having good overall evaluation performance might be obtained. In contrast, an adhesive tape that did not satisfy the above conditions of the present disclosure might have problems of delamination of products or adhesive residue.

Application Example

The RIM molding manufacturer might easily remove the excessive RIM molding resin on the surface of the adhesive tape without reducing the release effect by attaching the adhesive tape of Example 1 to the upper and lower molds for actual molding and performing about 100 times or more of molding and mold opening; the adhesive tape was well attached to the surface of the mold, and the attaching surface had no occurrence of floating up. It could be seen that the release property of the adhesive tape and the attachment of the adhesive tape and a mold were not in problem in practical application.

The above description is only for the specific embodiments of the present disclosure, but the scope of the present disclosure is not limited thereto, and any person skilled in the art may easily think of the changes or substitutions within the technical scope of the present disclosure, and shall cover the scope of the present disclosure. Therefore, the protection scope of the present disclosure shall be subject to the protection scope of the claims.

**Claims**

1. An anti-sticking adhesive tape for molding of a composite material,
   the anti-sticking adhesive tape comprising the following sequential laminated structures: a first layer being a fluorine-containing resin layer, a second layer being a first adhesive layer, a third layer being a reinforcing material layer and a fourth layer being a second adhesive layer;
   wherein a bonding force between the first layer and a resin for molding of a composite material is smaller than a 180-degree peeling adhesion force of the fourth layer, and an intermolecular cohesive force of the first adhesive layer and an intermolecular cohesive force of the second adhesive layer are both larger than the 180-degree peeling adhesion force of the fourth layer.

2. The anti-sticking adhesive tape according to claim 1, wherein the fluorine-containing resin layer comprises one or more of polytetrafluoroethylene resin, perfluoroethylene-propylene copolymer resin, polyvinylidene fluoride resin, perfluoro(alkoxy alkane) resin, and ethylene-tetrafluoroethylene copolymer resin.

3. The anti-sticking adhesive tape according to claim 1 or 2, wherein the fluorine-containing resin layer has a thickness of 20 to 200 $\mu$m.

4. The anti-sticking adhesive tape according to claim 1 or 2, wherein a ratio of the 180-degree peeling adhesion force of the fourth layer to the bonding force between the first layer and the resin for molding of a composite material is in a range of 3 to 16.

5. The anti-sticking adhesive tape according to claim 1 or 2, wherein the first adhesive layer and the second adhesive layer are silicone resin layers with a gel rate of 30 to 60%.

6. The anti-sticking adhesive tape according to claim 1 or 2, wherein the first adhesive layer and the second adhesive layer each have a thickness of 5 $\mu$m to 100 $\mu$m, respectively.

7. The anti-sticking adhesive tape according to claim 1 or 2, wherein the reinforcing material layer is a glass fiber cloth layer modified by a silicon-containing agent, and the glass fiber cloth has a thickness of 30 $\mu$m to 200 $\mu$m.

8. The anti-sticking adhesive tape according to claim 7, wherein the glass fiber cloth comprises 0.01 wt% to 2 wt% of the silicon-containing agent based on a weight of the glass fiber cloth.

9. The anti-sticking adhesive tape according to claim 8, wherein an amount of the silicon-containing agent is 0.05wt% to 0.5 wt% of the weight of the glass fiber cloth.

10. The anti-sticking adhesive tape according to claim 1 or 2, wherein a ratio of the intermolecular cohesive force of the first adhesive layer to the 180-degree peeling adhesion force of the fourth layer is 1.05 to 3.

11. The anti-sticking adhesive tape according to claim 1 or 2, wherein the anti-sticking adhesive tape further comprises a release film on the fourth layer and the total thickness of the anti-sticking adhesive tape in addition to the release film is 0.06 to 0.6 mm.

12. The anti-sticking adhesive tape according to claim 1 or 2, wherein the resin for molding of a composite material is unsaturated polyester resin or epoxy resin.

13. A manufacturing method of the anti-sticking adhesive tape according to any of claims 1 to 12, comprising the following steps of:

    (1) coating a first adhesive on the surface of a fluorine-containing resin;
    (2) drying the first adhesive and then attaching a reinforcing material; and
    (3) following by coating a second adhesive on the surface of the reinforcing material.

14. The manufacturing method according to claim 13, wherein a pressure of 0.05 MPa to 0.5 MPa and a temperature of 30°C to 150°C are used in the attaching process.

15. Use of the anti-sticking adhesive tape according to any of claims 1 to 12 for the molding of the composite material.

10

1
2
3
4

**FIG. 1**

5

1
2
3
4

10

6

**FIG. 2**

## INTERNATIONAL SEARCH REPORT

| International application No. |
| --- |
| **PCT/CN2019/072782** |

**A.    CLASSIFICATION OF SUBJECT MATTER**

C09J 7/00(2018.01)i;  C08J 5/08(2006.01)i;  B32B 27/12(2006.01)n

According to International Patent Classification (IPC) or to both national classification and IPC

**B.    FIELDS SEARCHED**

Minimum documentation searched (classification system followed by classification symbols)

C09J; C08J; B32B

Documentation searched other than minimum documentation to the extent that such documents are included in the fields searched

Electronic data base consulted during the international search (name of data base and, where practicable, search terms used)

CNABS; CNTXT; CNKI; EPTXT; USTXT; WOTXT; VEN; Web of science; 氟, 剥离, 模具, 胶带, 黏, 粘, 脱模, 玻璃纤维, 玻纤, 防粘, 硅, tape?, peel+, strip+, adhesi+, mold+, +fluor+, glass, fiber?, fibre

**C.    DOCUMENTS CONSIDERED TO BE RELEVANT**

| Category* | Citation of document, with indication, where appropriate, of the relevant passages | Relevant to claim No. |
| --- | --- | --- |
| X | CN 107513353 A (ZHOU, LI) 26 December 2017 (2017-12-26) description, paragraphs 1-10, and figure 1 | 1-4, 6, 10-15 |
| Y | CN 107513353 A (ZHOU, LI) 26 December 2017 (2017-12-26) description, paragraphs 1-10, and figure 1 | 5, 7-9, 13-15 |
| Y | CN 103305140 A (NITTO DENKO CORPORATION) 18 September 2013 (2013-09-18) description, paragraphs 57-66 | 5, 13-15 |
| Y | CN 103422356 A (TAI CHIA GLASS FIBER CO., LTD.) 04 December 2013 (2013-12-04) description, paragraphs 2-16 | 7-9, 13-15 |
| A | US 6602373 B1 (AVERY DENNISON CORP.) 05 August 2003 (2003-08-05) entire document | 1-15 |

☐ Further documents are listed in the continuation of Box C.      ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **14 March 2019** | **10 April 2019** |

| Name and mailing address of the ISA/CN | Authorized officer |
| --- | --- |
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/072782**

| Patent document cited in search report | | | Publication date (day/month/year) | Patent family member(s) | Publication date (day/month/year) |
|---|---|---|---|---|---|
| CN | 107513353 | A | 26 December 2017 | None | |
| CN | 103305140 | A | 18 September 2013 | None | |
| CN | 103422356 | A | 04 December 2013 | None | |
| US | 6602373 | B1 | 05 August 2003 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 104861889 A